(19) **Europäisches Patentamt / European Patent Office / Office européen des brevets**

(11) **EP 1 083 443 B1**

(12) **EUROPEAN PATENT SPECIFICATION**

(45) Date of publication and mention
of the grant of the patent:
**02.01.2008 Bulletin 2008/01**

(51) Int Cl.:
*G01S 15/89* (2006.01)     *G01S 7/52* (2006.01)
*A61B 8/00* (2006.01)      *G06T 5/00* (2006.01)
*G06T 17/20* (2006.01)

(21) Application number: **00119226.9**

(22) Date of filing: **06.09.2000**

(54) **Ultrasonic image apparatus for separating object**

Ultraschallbilderzeugungsgerät zur Objektdifferenzierung

Appareil d'imagerie à ultrasons pour séparer des objets

(84) Designated Contracting States:
**DE FR IT**

(30) Priority: **09.09.1999 KR 9938346**

(43) Date of publication of application:
**14.03.2001 Bulletin 2001/11**

(73) Proprietor: **MEDISON CO., LTD.**
**Kangwon-do 250-870 (KR)**

(72) Inventors:
• **Lee, Min Hwa**
**Apgujung-dong, Kangnam-gu, Seoul 135-110 (KR)**
• **Kim, Sang Hyun**
**Daechi-dong, Kangnam-gu, Seoul, 135-280 (KR)**
• **Ko, Seol Bin**
**Daechi-dong, Kangnam-gu, Seoul, 135-280 (KR)**
• **Gritzky, Arthur**
**c/o Kretztechnik AG**
**4871 Zipf (AT)**

(74) Representative: **Lempert, Jost et al**
**Patentanwälte,**
**Dipl.-Ing. Heiner Lichti,**
**Dipl.-Phys. Dr. rer. nat. Jost Lempert,**
**Dipl.-Ing. Hartmut Lasch,**
**Postfach 41 07 60**
**76207 Karlsruhe (DE)**

(56) References cited:
**US-A- 5 435 310         US-A- 5 732 203**

• **BOLSON E L ET AL: "Applying the CenterSurface model to 3-D reconstructions of the left ventricle for regional function analysis" COMPUTERS IN CARDIOLOGY 1995 VIENNA, AUSTRIA 10-13 SEPT. 1995, NEW YORK, NY, USA,IEEE, US, 10 September 1995 (1995-09-10), pages 63-66, XP010154359 ISBN: 0-7803-3053-6**

**Description**

**BACKGROUND OF THE INVENTION**

1. Field of the Invention

The present invention relates to a three-dimensional ultrasonic image system, and more particularly, to an ultrasonic image apparatus, in which a contour of a diagnostic object is automatically extracted, and the extracted contour is manually fine-tuned, to thereby visualize the pattern of the extracted contour.

2. Description of the Related Art

In general, an ultrasonic testing apparatus emits an ultrasonic signal to an object to be tested, and receives a returning ultrasonic signal reflected from a discontinuous plane of the object accordingly. Then, the received ultrasonic signal is converted into an electrical signal, which is output to a predetermined image apparatus, to thereby test the internal status of the object. The ultrasonic testing apparatus is widely used in medical diagnosis, non-destructive testing, underwater detection, and so on.

There are two existing methods for measuring the volume of a target object by use of an ultrasonic image.

In the case of the first method, a contour of a target object is traced in all transverse sections, and then each area of the transverse sections is calculated. Considering the thickness, the volume is calculated.

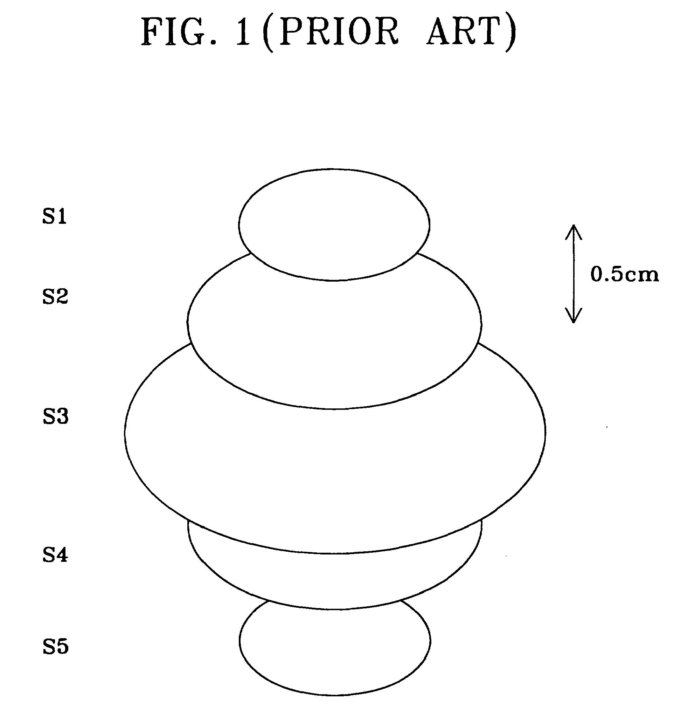

FIG. 1 shows an example of calculating the volume at the continuous transverse sections.

In FIG. 1, the volume of the prostate of a man is obtained. First, based on the ultrasonic fault images photographed at interval of 0.5cm, the prostate area of all cross-sections described at the transverse sections of the prostate is measured. Then, the volume of the prostate is obtained by multiplying the prostate area by the thickness of 0.5cm. This method can be represented by the following equation (1).

$$V = 0.5 \times (S1 + S2 + \cdots + S5) \qquad ...(1)$$

Here, V denotes the volume of the prostate, and S denotes the surface area of the prostate at each transverse section. The surface area is calculated in a manner that an observer draws a contour line of the prostate manually by using a mouse on a screen where an ultrasonic image is displayed, and calculates an area based on the drawn contour line.

In the case of the second method, a contour is traced only with respect to the maximum transverse section and an area is calculated, in order to measure the volume of a particular internal organ of a human body by using an ultrasonic image. Then, the shape of the internal organ is assumed an ellipse, and thereafter the volume in the case that the maximum transverse section is rotated with respect to the long axis is calculated according to a defined formula. This method is called a one-section rotation elliptical approximation method. When an area at the maximum transverse section is S, and the long axis is X, the volume V of the rotational elliptical body is obtained by rotating the ellipse of the area S around the long axis X which is set the rotational axis. The calculation formula is represented as the following equation (2).

$$V = \frac{8S^2}{3\pi X} \qquad ...(2)$$

In the first method, a very accurate volume can be obtained. However, since the contour should be traced manually with respect to all the transverse sections, much time is required. Also, in the second method, since only one-time manual trace is performed in order to calculate the volume by the determined formula, quick processing is possible but its accuracy is very low. Also, both the two methods do not separate a target object from the background and do not visualize the separated object. Thus, an observer cannot view a three dimensional shape of the target object and a two dimensional shape of the cross-section assuming that the object has been cut at a certain angle.

US patent US 5,732,203 of 24 March 1998 discloses a process that produces digitized images of a plurality of parallel cross-sections of the solid surrounding the volume, processes the digitized images to digitally create a contour of the volume, and digitally processes the contour of the volume so that the contour may be exploited for application.

## SUMMARY OF THE INVENTION

To solve the above problems, it is an object of the present invention to provide an ultrasonic image apparatus for quickly separating a target object from the background, and visualizing the separated object in a three dimensional image, by use of volume data obtained from a two dimensional ultrasonic image.

To accomplish the above object of the present invention, there is provided an ultrasonic image apparatus for separating a target object from the background, and visualizing the separated object in a three dimensional image, the ultrasonic image apparatus comprising: a volume data acquisition unit for combining two dimensional ultrasonic images input from the object and producing volume data; a reference point and rotational axis setting unit for setting a rotational axis for rotating the volume data and setting points where the rotational axis and the object intersect as reference points; a data rotating unit for rotating the volume data by a predetermined angle around the rotational axis; a contour extraction unit for extracting a contour line with respect to the two dimensional ultrasonic image at a respective angle obtained by rotating the volume data and setting vertices on the contour line, to thereby extract a contour; and a three dimensional image production unit for forming a wire frame from the set vertices and producing a three dimensional image.

## BRIEF DESCRIPTION OF THE DRAWINGS

The above object and other advantages of the present invention will become more apparent by describing the preferred embodiment thereof in more detail with reference to the accompanying drawings in which:

FIG. 1 shows an example of calculating the volume at the continuous transverse sections using a conventional ultrasonic image;
FIG. 2 is a block diagram showing an ultrasonic image apparatus separating a target object from the background, and visualizing the separated object in a three dimensional image, according to an embodiment of the present invention;
FIG. 3 shows a rotational axis and reference point setting status for separating an object from the background;
FIG. 4A shows an example of an observatory window for automatic contour extraction;
FIG. 4B shows a binarized image for automatic contour extraction;
FIG. 4C shows a binarized image from which a small area is removed for automatic contour extraction;
FIG. 4D shows a post-processed resultant image for automatic contour extraction;
FIG. 5 shows a contour extracted with respect to a certain plane and the vertices in the extracted contour;
FIG. 6 shows a wire frame for graphic processing using the vertices; and
FIG. 7 shows a combined three-dimensional image.

## DETAILED DESCRIPTION OF THE PREFERRED EMBODIMENT

A preferred embodiment of the present invention will be described with reference to the accompanying drawings.

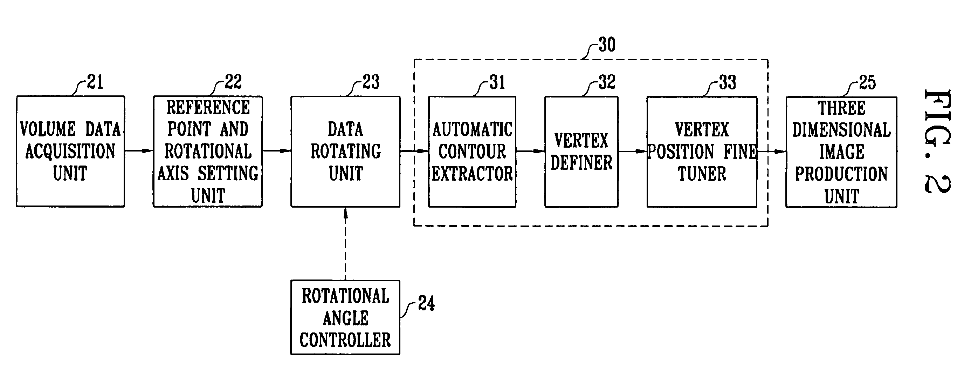

Referring to FIG. 2, an ultrasonic image apparatus according to an embodiment of the present invention includes a volume data acquisition unit 21 for combining two dimensional ultrasonic images and obtaining volume data. A reference point and rotational axis setting unit 22 sets the rotational axis of the volume data and sets two points where the rotational axis and the object intersect as a reference point. A data rotating unit 23 rotates the volume data by a predetermined angle around the rotational axis under a rotational angle controller 24. Also, the FIG. 2 apparatus includes a contour extraction unit 30 for extracting a contour with respect to the plane at the rotated angle and defining vertices which are used for graphic processing on the extracted contour. The contour extraction unit 30 includes an automatic contour extractor 31, a vertex definer 32 and a vertex position fine tuner 33. A three dimensional image production unit 24 forms a wire frame from the vertices defined in the contour extraction unit 30 and produces a three dimensional image of the object using a computer graphic technique.

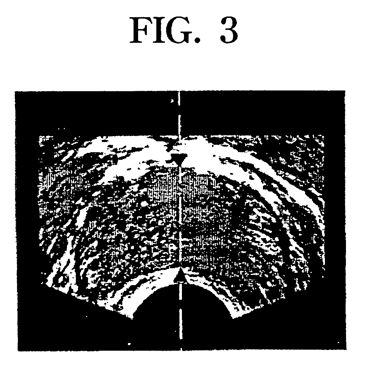

The ultrasonic image apparatus for separating an object having the above configuration will be described in detail with reference to FIGs. 3 through 7.

The volume data acquisition unit 21 receives two dimensional ultrasonic images through an ultrasonic continuous scanning and produces volume data. That is, the ultrasonic images are collected to form a single volume. The reference point and rotational axis setting unit 22 sets the rotational axis for rotating the volume data produced in the volume data acquisition unit 21 by 360° and sets two points where the rotational axis and the contour of the object intersect, as a reference point.

The process is shown in FIG. 3. That is, FIG. 3 shows a rotational axis and reference point setting status for separating an object from the background, in which the vertical line is the rotational axis and two triangles denote reference points.

The rotational angle controller 24 in FIG. 2 outputs a control signal for rotating the volume data by a predetermined angle to the data rotating unit 23. Accordingly, the data rotating unit 23 rotates the volume data by the predetermined angle and produces a two dimensional ultrasonic image at a respective angle. The automatic contour extractor 31 in the contour extraction unit 30 binarizes the image with respect to the two dimensional ultrasonic image plane at a respective angle and divides the area. Then, the small areas are removed and thereafter a contour line of a single area is extracted.

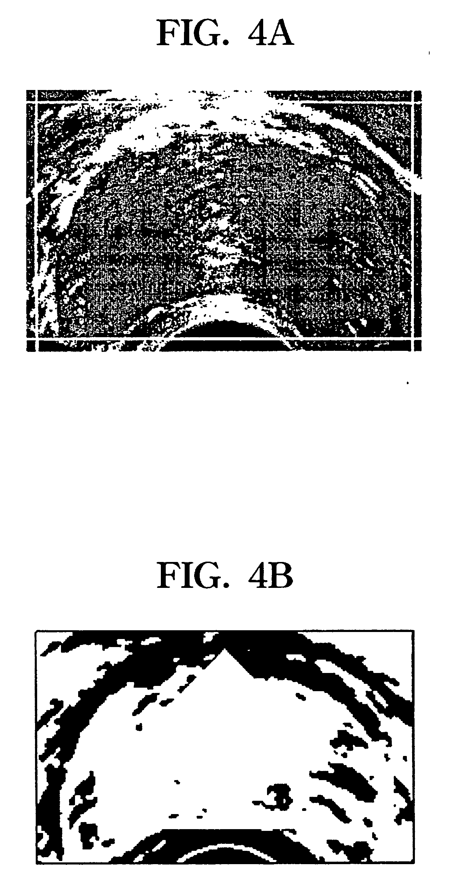

The automatic contour extraction process in the automatic contour extractor 31 will be described in detail with reference to FIGs. 4A through 4D.

First, the automatic contour extractor 31 sets an observatory window showing the approximate position and size of the two dimensional ultrasonic image input from the data rotating unit 23 (see FIG. 4A). It is assumed that the volume data of the object corresponds to the first frame which has not been rotated, and the object from which the contour is extracted exists at a respective angle when the volume data is rotated around the rotational axis. Also, a rectangular for estimating the lengths of the top and bottom and the left and right of the object based on the reference point is defined as an observatory window, to thereby represent the size of the object. Then, the size of the observatory window is adjusted at a small clearance in contour information of the object obtained at a preceding frame, with respect to the second frame obtained by rotating the volume data by a predetermined angle. This process is repeated until the volume data is completely rotated by 360°. As shown in FIG. 4A, the observatory window is larger than the size of an actual object to a certain degree and includes the object.

Then, binarization for separating the object from the background is adaptively performed. That is, since the above-described observatory window is the approximate size of the object, binarization is not applied to the whole image input but applied within the observatory window. FIG. 4B shows a binarized image.

The binarized image has a number of noise components. Thus, a morphological filter is applied in order to remove the noise components.

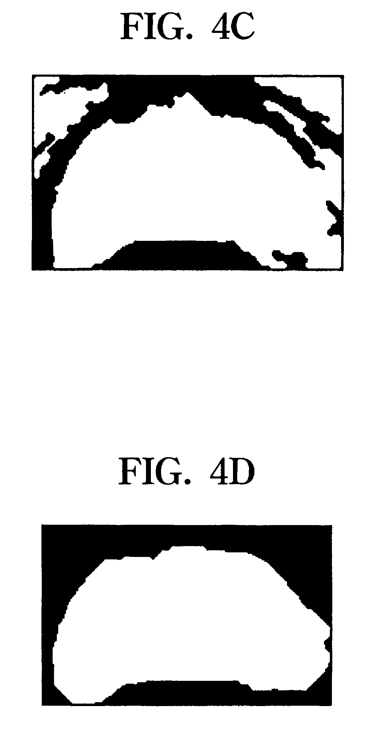

In the case of the binary image to which the morphological filter is applied, the noise components have been removed but small areas still exist. Thus, the small areas should be removed in order to extract an accurate object. According to a method for removing the small areas, the size of each area is investigated in the binary image and then the area is classified into an object area or a background area according to a predetermined reference. For example, in FIG. 4b, an area which has been classified into the object area and whose size is smaller than the reference is converted into a background area and in the reverse case, the background area is converted into the object area, to thereby remove the small areas. FIG. 4C shows a binarized image from which the small areas have been removed.

The binary image from which the small areas have been removed includes several large areas. A morphological filter is applied to the binary image from which the small areas have been removed, in order to simplify the image. That is, only an area whose size is largest among the areas corresponding to the object is extracted. FIG. 4D shows an image resulting from post-processing, in which a boundary of the finally extracted area is determined as a contour of the object. Here, a number of sudden changes exist in the boundary of the area. Since the sudden changes cannot exist in the real natural system, a smoothing filter is applied along the boundary of the extracted area, to remove the sudden changes.

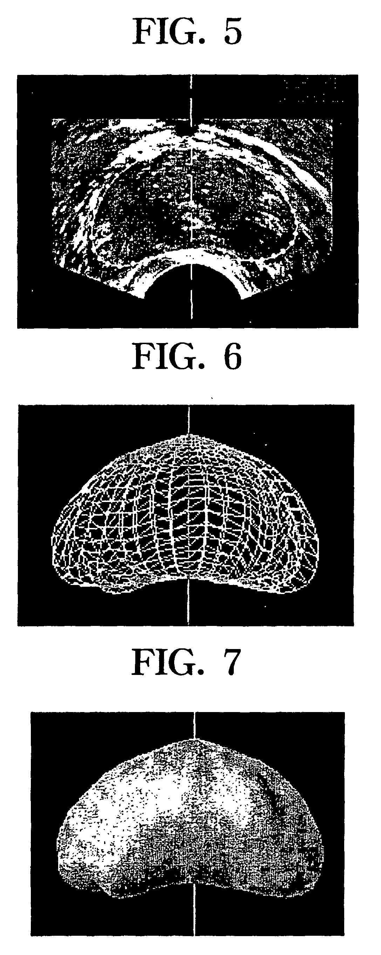

The automatic contour extractor 31 extracts the contour of the object which is the two dimensional ultrasonic image. Then, the vertex definer 32 selects the vertices at a predetermined interval on the contour line of the object. FIG. 5 shows a contour which is automatically extracted with respect to a certain plane and the vertices in the extracted contour. The automatically extracted contours and vertices of the object may not be completely consistent with the contour of the original object. Thus, the vertex position fine tuner 33 manually fine-tunes the positions of the automatically extracted vertices in order to have them consistent with the contour of the original object. The three dimensional image production unit 25 uses the extracted vertices and forms a three dimensional frame (see FIG. 6). A shading or quality mapping of the computer graphic is applied to the frame, to thereby produce the three dimensional image, which is shown in FIG. 7.

As described above, the present invention defines the rotational axis, rotates the three dimensional volume data around the rotational axis, acquires the contour of the target object, and separates the object from the background. Here, in a method for obtaining a contour, a contour is automatically extracted and the extracted contour is manually fine-tunes, to thereby obtain final contour information. Therefore, it is possible to apply a method which requires much execution time but adjusts only positions of the vertices of the predetermined figure manually and forms the contour of the object, without having an automatic contour extraction, to thereby synthesize the three dimensional image with only the contour information.

As described above, the ultrasonic image apparatus according to the present invention automatically extracts the contour of the target object, fine-tunes the extracted contour, and quickly and accurately separates the object from the object, to thereby extract the object. The object is visualized in three dimensional pattern based on the extracted information, to thereby view the shape of the object without having a physical treatment such as a surgery operation. It is also possible to display the shape of the two dimensional cross-section in the case that the object has been cut at a certain angle. Since the present invention has the shape information of the three dimensional object additionally, the volume of the apparatus necessary for diagnosis can be obtained without making a particular additional calculation.

**EP 1 083 443 B1**

### Claims

1. An ultrasonic image apparatus for separating a target object from the background, and visualizing the separated object in a three dimensional image, the ultrasonic image apparatus comprising:

   a volume data acquisition unit for combining two dimensional ultrasonic images input from the object and producing volume data;

   a reference point and rotational axis setting unit for setting a rotational axis for rotating the volume data and setting points where the rotational axis and the object intersect as reference points;

   a data rotating unit for rotating the volume data by a predetermined angle around the rotational axis;

   a contour extraction unit for extracting a contour line with respect to the two dimensional ultrasonic image at a respective angle obtained by rotating the volume data and setting vertices on the contour line, to thereby extract a contour; and

   a three dimensional image production unit for forming a wire frame from the set vertices and producing a three dimensional image.

2. The ultrasonic image apparatus of claim 1, wherein said contour extraction unit comprises:

   an automatic contour extractor for binarizing the two dimensional ultrasonic image at the respective angles, classifying the binarized result into the areas, selecting only one area among the classified areas, and extracting the contour line of the area;

   a vertex definer for selecting the vertices at a predetermined interval on the extracted contour line; and

   a fine tuner for fine tuning the extracted contour line so that the positions of the defined vertices are consistent with the contour of the original object.

3. The ultrasonic image apparatus of claim 2, wherein said automatic contour extractor selects the largest area among the classified areas.

4. The ultrasonic image apparatus of claim 2, wherein said automatic contour extractor performs a morphological filtering in order to remove the noise components included in the binarized image.

5. The ultrasonic image apparatus of claim 1, wherein said data rotating unit further comprises a rotational angle controller for outputting a rotational angle for rotating the volume data by a predetermined angle.

6. The ultrasonic image apparatus of claim 1, wherein said three dimensional image production unit produces a three dimensional image by applying a shading of the computer graphic to the wire frame.

7. The ultrasonic image apparatus of claim 1, wherein said three dimensional image production unit produces a three dimensional image by applying a quality mapping of the computer graphic to the wire frame.

### Patentansprüche

1. Ultraschallbildgerät zur Trennung eines Zielobjekts vom Hintergrund und zur separaten visuellen Darstellung dieses Objekts in einem dreidimensionalen Bild, wobei das Ultraschallbildgerät folgende Elemente umfasst:

   eine Aufnahmeeinheit für Volumendaten, welche die zweidimensionalen Eingangsdaten des Objekts kombiniert und daraus Volumendaten erstellt;

   eine Einstellungseinheit für Bezugspunkte und Rotationsachsen, die eine Drehachse zur Rotation der Volumendaten vorgibt und Punkte, an welchen sich die Rotationsachse und das Objekt schneiden, als Bezugspunkte bestimmt;

   eine Datenrotationseinheit, welche die Volumendaten um einen vorbestimmten Winkel um die Rotationsachse dreht;

   eine Einheit zur Konturenextraktion, die eine Konturenlinie (Umrisslinie) gemäß dem zweidimensionalen Bild unter den jeweiligen Winkeln aufnimmt, die man durch die Rotation der Volumendaten und das Setzen von Scheitelpunkten an dieser Konturenlinie erhält, um die Kontur (den Umriss) zu bestimmen, und

   eine Einheit zur Erzeugung dreidimensionaler Bilder, die anhand der gesetzten Scheitelpunkte ein Drahtgittermodell bildet und ein dreidimensionales Bild erzeugt.

**2.** Ultraschallbildgerät nach Anspruch 1, wobei die erwähnte Einheit zur Konturenextraktion folgende Elemente umfasst:

eine Vorrichtung zur automatischen Konturenextraktion, zur binären Umwandlung des zweidimensionalen Ultraschallbilds an den jeweiligen Winkeln, wobei das binäre Ergebnis den Flächen zugeordnet, nur eine dieser Flächen ausgewählt und ihre Konturlinie extrahiert (gewonnen) wird;
eine Vorrichtung zur Scheitelpunktbestimmung, welche die Scheitelpunkte auf der extrahierten Konturlinie der Fläche in einem vorbestimmten Intervall auswählt, und
eine Feinabstimmvorrichtung zur Feinabstimmung der gewonnenen Konturlinie, derart, dass die Positionen der festgelegten Scheitelpunkte mit den Konturen des Originalobjekts verträglich sind.

**3.** Ultraschallbildgerät nach Anspruch 2, wobei die Vorrichtung zur automatischen Konturenextraktion die größte der zugeordneten Flächen auswählt.

**4.** Ultraschallbildgerät nach Anspruch 2, wobei die Vorrichtung zur automatischen Konturenextraktion eine morphologische Filterung vornimmt, um die Rauschkomponenten aus dem binären Bild zu entfernen.

**5.** Ultraschallbildgerät nach Anspruch 1, wobei die Datenrotationseinheit außerdem eine Steuervorrichtung für den Rotationswinkel umfasst, welche einen Rotationswinkel vorbestimmt und ausgibt, um den die Volumendaten zu drehen sind.

**6.** Ultraschallbildgerät nach Anspruch 1, wobei die Einheit zur Erzeugung dreidimensionaler Bilder durch Schattierungen des Drahtgittermodells mittels der Computergraphik ein dreidimensionales Bild erzeugt.

**7.** Ultraschallbildgerät nach Anspruch 1, wobei die Einheit zur Erzeugung dreidimensionaler Bilder durch eine Abbildung hoher Qualität des Drahtgittermodells mittels der Computergraphik ein dreidimensionales Bild erzeugt.

**Revendications**

**1.** Appareil d'imagerie à ultrasons pour séparer un objet cible du fond, et visualiser l'objet séparé dans une image tridimensionnelle, l'appareil d'imagerie à ultrasons comprenant :

- une unité de saisie de données volumiques pour combiner des images à ultrasons bidimensionnelles saisies à partir de l'objet et produire des donnés volumiques ;
- une unité d'établissement de points de référence et d'axes de rotation pour établire un axe de rotation pour faire tourner les donnés volumiques et établir des points là où l'axe de rotation et l'objet se croisent en tant que points de référence ;
- une unité de rotation de données pour faire tourner d'un angle prédéterminé les données volumiques autour de l'axe de rotation ;
- une unité d'extraction de contour pour extraire une ligne de contour par rapport à l'image à ultrasons bidimensionnelle à un angle respectif obtenu en faisant tourner les données volumiques et en établissant des sommets sur la ligne de contour, pour ainsi extraire un contour ; et

une unité de production d'images tridimensionnelles pour former un réseau à partir des sommets établis et produire une image tridimensionnelle.

**2.** Appareil d'imagerie à ultrasons selon la revendication 1, dans lequel ladite unité d'extraction de contour comprend :

- un extracteur de contour automatique pour binariser l'image à ultrasons bidimensionnelle aux angles respectifs, classifier le résultat binarisé dans les zones, sélectionner seulement une zone parmi les zones classifiées, et extraire la ligne de contour de la zone ;
- un outil de définition de sommets pour sélectionner les sommets à un intervalle prédéterminé sur la ligne de contour extraite ; et
- un dispositif de réglage fin pour réaliser un réglage fin de la ligne de contour extraite de manière que les positions des sommets définis correspondent au contour de l'objet original.

**3.** Appareil d'imagerie à ultrasons selon la revendication 2, dans lequel ledit extracteur de contour automatique sélectionne la zone la plus grande parmi les zones classifiées.

4.  Appareil d'imagerie à ultrasons selon la revendication 2, dans lequel ledit extracteur de contour automatique accomplit un filtrage morphologique afin d'éliminer les composants de bruit inclus dans l'image binarisée.

5.  Appareil d'imagerie à ultrasons selon la revendication 1, dans lequel ladite unité de rotation de données comprend, en outre, un contrôleur d'angle de rotation pour constituer un angle de rotation pour faire tourner les données volumiques d'un angle prédéterminé.

6.  Appareil d'imagerie à ultrasons selon la revendication 1, dans lequel ladite unité de production d'images tridimensionnelles produit une image tridimensionnelle en appliquant un ombrage de l'infographie au réseau.

7.  Appareil d'imagerie à ultrasons selon la revendication 1, dans lequel ladite unité de production d'images tridimensionnelles produit une image tridimensionnelle en appliquant une cartographie de qualité de l'infographie au rendu en fil de fer.

# FIG. 1 (PRIOR ART)

S1

S2

S3

S4

S5

0.5cm

EP 1 083 443 B1

# FIG. 2

25 — THREE DIMENSIONAL IMAGE PRODUCTION UNIT

30

33 — VERTEX POSITION FINE TUNER

32 — VERTEX DEFINER

31 — AUTOMATIC CONTOUR EXTRACTOR

23 — DATA ROTATING UNIT

24 — ROTATIONAL ANGLE CONTROLLER

22 — REFERENCE POINT AND ROTATIONAL AXIS SETTING UNIT

21 — VOLUME DATA ACQUISITION UNIT

9

FIG. 3

# FIG. 4A

# FIG. 4B

EP 1 083 443 B1

# FIG. 4C

# FIG. 4D

12

## FIG. 5

## FIG. 6

## FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5732203 A